# EUROPEAN PATENT APPLICATION

(11) **EP 4 834 542 A1**
(43) Date of publication of application: **04.11.2026**
(21) Application number: 26175694.4
(22) Date of filing: 30.04.2026
(51) Int. Cl.: B25J 11/00, G06N 3/008, B25J 9/16, B25J 19/02

(54) **JUDGMENT APPARATUS, ROBOT, JUDGMENT METHOD, AND PROGRAM**

(30) Priority: 02.05.2025 JP 2025076537
(71) Applicant: Casio Computer Co., Ltd., Tokyo 151-8543 (JP)
(72) Inventor: MAYUZUMI, Kouki, Tokyo, 205-8555 (JP); TERAZAKI, Tsutomu, Tokyo, 205-8555 (JP); MAEDA, Maki, Tokyo, 205-8555 (JP)
(74) Representative: Plougmann Vingtoft a/s

(57) **Abstract**

A judgment apparatus (10) includes one or more processors (11). The one or more processors judge a type of an external stimulus received by a robot (1) and involving contact with the robot, based on first detected data (D1) and second detected data (D2). The first detected data is obtained by a sensor (S) capable of detecting contact with the robot. The second detected data is related to sound and obtained by a sound detector (54) included in the robot.

## Description

### BACKGROUND OF THE INVENTION

### TECHNICAL FIELD

The present disclosure relates to a judgment apparatus, a robot, a judgment method, and a program.

### DESCRIPTION OF RELATED ART

A known robot detects external stimuli involving contact with a touch sensor, performs reaction motions in response to the detected external stimuli, and thereby behaves like a real creature (for example, see Japanese Unexamined Patent Application Publication No. 2003-121274).

### SUMMARY OF THE INVENTION

### TECHNICAL PROBLEM

It is difficult for the robot of the above known art to distinguish external stimuli in different contact manners and judge the types of external stimuli.

An object of the present disclosure is to distinguish and judge external stimuli in different contact manners.

### SOLUTION TO PROBLEM

To solve the above problem, according to the present disclosure, a judgment apparatus includes one or more processors configured to judge a type of an external stimulus received by a robot and involving contact with the robot, based on first detected data and second detected data, wherein: the first detected data is obtained by a sensor capable of detecting contact with the robot, and the second detected data is related to sound and obtained by a sound detector included in the robot.

### ADVANTAGEOUS EFFECTS

According to the present disclosure, external stimuli in different contact manners can be distinguished and judged.

### BRIEF DESCRIPTION OF DRAWINGS

FIG. 1 shows the appearance of a robot.
FIG. 2 shows a schematic configuration of a main body of the robot.
FIG. 3 shows a block diagram of a functional configuration of the robot.
FIG. 4 shows regions where touch sensors are provided.
FIG. 5 shows detected data.
FIG. 6 shows a standard data table.
FIG. 7 shows a diagram for explaining how to judge "poking" and "stroking" based on the contact strength.
FIG. 8 is a flowchart showing the control procedure of a robot control process.
FIG. 9 is a flowchart showing the control procedure of an input judgment process.
FIG. 10 is a flowchart showing the control procedure of an external stimulus judgment process.
FIG. 11 is a flowchart showing the control procedure of an output determination process.

### DETAILED DESCRIPTION

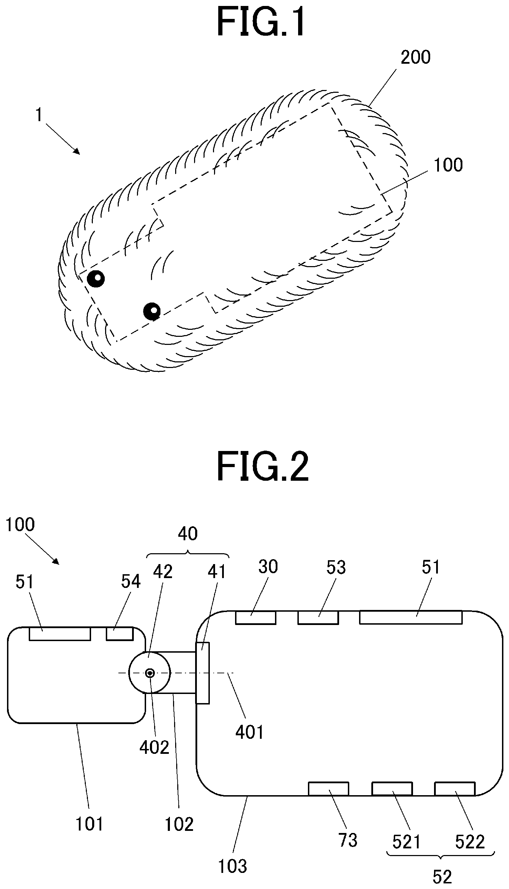

Hereinafter, an embodiment of the present disclosure will be described with reference to the drawings. As shown in FIG. 1, a robot 1 includes a main body 100 and an exterior 200 that covers the entire surface of the main body 100. The robot 1 is a pet robot that imitates a small creature. The robot 1 can perform different motions imitating gestures of a creature. The exterior 200 is made of flexible material. The shape of the exterior 200 changes according to the movements of the main body 100. The exterior 200 includes fur made of pile fabric and decorative members representing eyes, for example. On the back surface of the exterior 200 (the surface in contact with the main body 100), non-illustrated engaging parts are provided that can engage with non-illustrated hooks provided on the front surface of the main body 100. By the engagement between the engaging parts and the hooks, the exterior 200 does not greatly shift from the main body 100. The number of the engaging parts and hooks is set to a minimum to avoid restricting the movement of the main body 100 and to allow easy attachment and detachment of the exterior 200. In this embodiment, the engaging parts and hooks are provided at three positions: the positions corresponding to the left and right eyes of the robot 1 and the back end position.

As shown in FIG. 2, the main body 100 of the robot 1 includes a head 101, a body 103, and a connection part 102 that connects the head 101 and the body 103. The main body 100 includes a drive unit 40 for moving the head 101 with respect to the body 103. The head 101 of the robot 1 corresponds to a movable part. The drive unit 40 includes a twist motor 41 and an up-down motor 42. The twist motor 41 is a servomotor that rotates the head 101 and the connection part 102 within a predetermined range of angles on a first rotation axis 401 extending in the direction in which the connection part 102 extends. By the movement of the twist motor 41, the robot 1 makes a motion of twisting the head 101. The up-down motor 42 is a servomotor that rotates the head 101 on a second rotation axis 402 perpendicular to the first rotation axis 401 within a predetermined range of angles. By the up-down motor 42, the robot 1 makes a motion of raising and lowering the head 101. The direction of the up-down movement of the head 101 can be inclined with respect to the vertical direction, depending on the angle of the head 101 twisted by the twist motor 41. By periodic small movements of the twist motor 41 and/or the up-down motor 42, the robot 1 makes motions of rocking or shaking the head 101. The timing, the magnitude, and the speed of movements of the twist motor 41 and the up-down motor 42 can be appropriately adjusted and combined to cause the robot 1 to perform various motions, such as a pleased motion, a startled motion, and a breathing motion imitating breathing of a living creature, for example. Among these motions, the breathing motion is one type of spontaneous motions by the robot 1. The main body 100 includes touch sensors 51, a motion sensor 52, an illuminance sensor 53, a microphone 54 (sound detector), a sound output unit 30, and a power receiving coil 73. The motion sensor 52 includes an acceleration sensor 521 and a gyro sensor 522. The touch sensors 51 are provided at the upper parts of the head 101 and the body 103. The motion sensor 52 and the power receiving coil 73 are provided near the bottom surface of the body 103. The illuminance sensor 53 and the sound output unit 30 are provided at the upper part of the body 103. The microphone 54 is provided at the upper part of the head 101 near the base of the head 101.

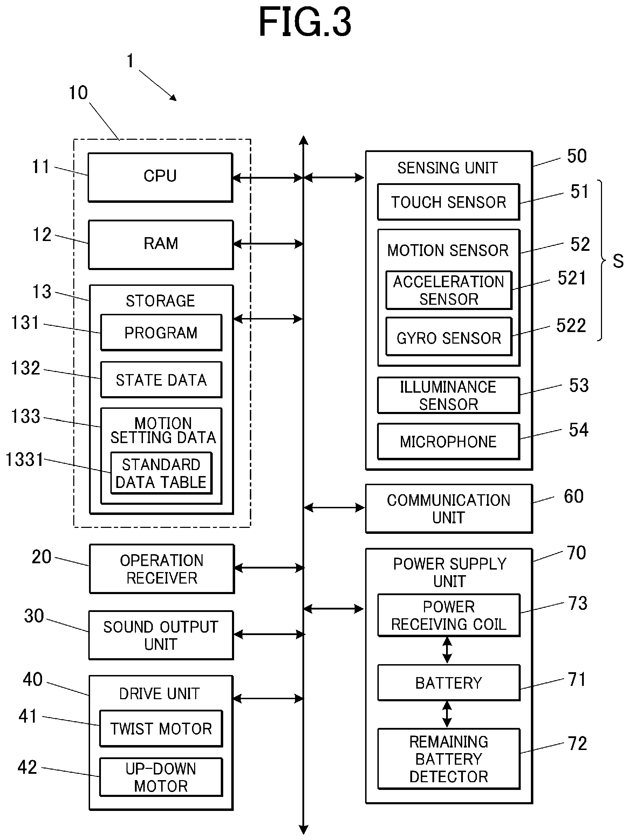

As shown in FIG. 3, the robot 1 includes a central processing unit (CPU) 11 (one or more processors), a random-access memory (RAM) 12, a storage 13, an operation receiver 20, the sound output unit 30, the drive unit 40, a sensing unit 50, a communication unit 60, and a power supply unit 70. The CPU 11, the RAM 12, and the storage 13 constitute a judgment apparatus 10 that judges the type of an external stimulus that the robot 1 has received. The components of the robot 1 are connected to each other via a data communication path, such as a bus. All the functional components shown in FIG. 3 are provided to the main body 100. The CPU 11 is a processor that reads and executes a program 131 stored in the storage 13 and performs various arithmetic operations to control motions of the robot 1. The robot 1 may include multiple processors (e.g., multiple CPUs). Multiple processes to be executed by the CPU 11 in this embodiment may be executed by the multiple processors. In such a case, the multiple processors constitute the one or more processors. The multiple processors may be involved in the same process(es) or independently perform different processes in parallel. The RAM 12 provides a working memory space for the CPU 11 and stores temporary data.

The storage 13 is a non-transitory recording medium readable by the CPU 11 as a computer and stores the program 131 and various kinds of data. The storage 13 includes a nonvolatile memory, such as a flash memory, for example. The program 131 is stored in the storage 13 in the form of a computer-readable program code. The data stored in the storage 13 includes state data 132 and motion setting data 133. The state data 132 includes data indicating the current state of the robot 1 and its surrounding environment. For example, the state data 132 includes emotion parameters indicating simulated emotions of the robot 1, character parameters indicating a simulated character of the robot 1, data on growth days of the robot 1, the current motion mode of the robot 1, sleepiness parameters indicating the degree of sleepiness of the robot 1, and data indicating the brightness around the robot 1. The state data 132 is constantly updated according to the history of the motions of the robot 1 and so forth. The motion setting data 133 includes contents of motions, such as (i) reaction motions to be performed by the robot 1 depending on the state of the robot 1 or the contents of external stimuli and (ii) auto-generated motions to be performed spontaneously by the robot 1 without external stimuli. The settings for the contents of motions include (i) the timing and the movement amount of the twist motor 41 and the up-down motor 42 of the drive unit 40 and (ii) the pitch (height), length, and volume of sound to be output by the sound output unit 30, for example. The motion setting data 133 includes a standard data table 1331 that is referred to in a external stimulus judgment process described later. The details of the standard data table 1331 are described later.

The operation receiver 20 includes operation buttons and knobs for turning on/off the power, adjusting the volume of sound output by the sound output unit 30, and so forth. The operation receiver 20 outputs operation information corresponding to operations input with the operation buttons and knobs to the CPU 11. The sound output unit 30 includes a speaker and outputs sound at a pitch (height), length, and volume in accordance with control signals and sound data sent by the CPU 11. The sound output unit 30 may output a sound mimicking a cry (call) of a living creature. The drive unit 40 operates the twist motor 41 and the up-down motor 42 in accordance with control signals sent by the CPU 11.

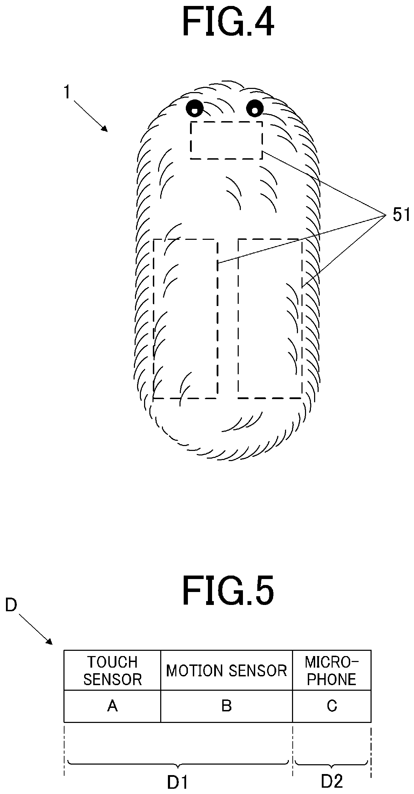

The sensing unit 50 includes the touch sensors 51, the motion sensor 52, the illuminance sensor 53, and the microphone 54 described above. The sensing unit 50 outputs detected data by these sensors and the microphone 54 to the CPU 11. The touch sensors 51 and the motion sensor 52 constitute sensors S. The touch sensors 51 detect contact of an object with the robot 1. Herein, the object may be the user. In this embodiment, the touch sensors 51 can also detect the contact strength. Each of the touch sensors 51 includes, for example, a pressure sensor, such as a capacitance sensor, or a piezoelectric sensor. The touch sensor 51 outputs detected data indicating whether the robot 1 has been contacted (touched) to the CPU 11. The touch sensor 51 also outputs the contact strength with respect to the robot 1 to the CPU 11. The touch sensor 51 may detect pressure equal to or greater than a predetermined first threshold as contact and may not detect pressure less than the first threshold. The first threshold may be changeable by the CPU 11. Increasing the first threshold means decreasing the contact detection sensitivity of the touch sensor 51. As shown in FIG. 2 and FIG. 4, the touch sensors 51 are provided on the top surface of the head 101 and the left and right sides of the top surface of the body 103 of the robot 1. In this embodiment, the head 101 side of the robot 1 is defined as the front side, the body 103 side of the robot is defined as the back side, and the direction perpendicular to the front-back direction when viewed in the direction perpendicular to the top surface of the body 103 is defined as the left-right direction. When viewed in the direction perpendicular to the top surface of the body 103, the left side of the top surface of the body 103 refers to the left side from the center of the body 103; and the right side of the top surface of the body 103 refers to the right side from the center of the body 103, with respect to the left-right direction. When an object contacts the regions where the touch sensors 51 are provided on the surface of the robot 1, the touch sensors 51 detect the contact. On the other hand, when an object contacts a part outside the regions of the touch sensors 51 on the surface of the robot 1, such as when the object contacts the neck part between the head 101 and the body 103, the touch sensors 51 do not detect the contact. The arrangement of the touch sensors 51 shown in FIG. 2 and FIG. 4 is an example. The regions where the touch sensors 51 are provided and the number of the touch sensors 51 can be changed.

The acceleration sensor 521 and the gyro sensor 522, which constitute the motion sensor 52, detect movements of the robot 1. The movements of the robot 1 include movements corresponding to mechanical force that the robot 1 has received. The motion sensor 52 may also be called an inertial sensor. The acceleration sensor 521 detects acceleration in each of three axes perpendicular to each other and outputs the detected data to the CPU 11. The gyro sensor 522 detects angular velocity around each of three axes perpendicular to each other and outputs the detected data to the CPU 11. Since the acceleration sensor 521 and the gyro sensor 522 each have three detection axes, the motion sensor 52 is also called a 6-axis sensor. The illuminance sensor 53 detects brightness around the robot 1 and outputs the detected data to the CPU 11. The microphone 54 detects sound around the robot 1 and outputs the detected sound data to the CPU 11. The microphone 54 may detect sound equal to or greater than a predetermined second threshold as an external stimulus and may not detect sound less than the second threshold. The second threshold may be changeable by the CPU 11. Increasing the second threshold means decreasing the sound detection sensitivity of the microphone 54.

The communication unit 60 is a communication module that includes an antenna, a modulation-demodulation circuit, and a signal processing circuit. The communication unit 60 performs wireless data communication with external devices in accordance with a predetermined communication protocol. The power supply unit 70 includes a battery 71, a remaining battery detector 72, and the power receiving coil 73. The battery 71 supplies power to the components of the robot 1. The battery 71 in this embodiment is a secondary battery that is repeatedly rechargeable by a non-contact recharging method. The remaining battery detector 72 detects the remaining battery level of the battery 71 in accordance with control signals sent by the CPU 11 and outputs the detection result to the CPU 11. The charging operation of the battery 71 is performed in a state where the robot 1 is housed (set) in a non-illustrated dedicated power feeder (housing, charging dock). The power feeder has a power sending coil at a position opposite the power receiving coil 73 of the robot 1 in the housed state. The power sending coil generates a magnetic field, which induces a current by electromagnetic induction, and the power receiving coil 73 of the robot 1 supplies the induced current to the battery 71. With such a configuration, the charging operation of the battery 71 automatically starts when the robot 1 is housed in the power feeder. The method of charging the battery 71 is not limited to the non-contact charging method but may be a contact charging method.

Next, the motions of the robot 1 are described. The robot 1 performs reaction motions in response to external stimuli and spontaneous motions (auto-generated motions) under the control of the CPU 11. The CPU 11 detects an external stimulus received by the robot 1 and judges the type of the external stimulus, based on the detected data by the touch sensors 51, the motion sensor 52, and the microphone 54. The CPU 11 determines the motion (reaction motion) corresponding to the external stimulus received by the robot 1 and causes the robot 1 to perform the determined motion. Specifically, the CPU 11 causes the drive unit 40 to drive the twist motor 41 and the up-down motor 42 and causes the sound output unit 30 to output sound so that the robot 1 performs the determined motion. Multiple candidates for a motion to be performed by the robot 1 in response to an external stimulus are set for each external stimulus and registered in the motion setting data 133 beforehand. Among the multiple motions (candidates) corresponding to the detected external stimulus, the CPU 11 determines one motion in accordance with a predetermined rule and causes the robot 1 to perform the determined motion. Specifically, each of the motions corresponding to an external stimulus is allocated with a probability of being selected beforehand. In accordance with the probabilities, the CPU 11 selects and determines one motion. The candidates for a motion that can be selected in response to a certain external stimulus vary depending on the character parameters of the robot at the time, the environmental condition (brightness around the robot 1), whether the robot 1 is in a sleep mode imitating sleep, and so forth. Therefore, the robot 1 performs various motions in response to detecting an external stimulus, depending on the individuality and the state of the robot 1. Further, the probabilities allocated to the respective motions vary depending on the growth period (days) of the robot 1 at the time. Therefore, the motions of the robot 1 change as the robot 1 grows. In addition to the above reaction motions corresponding to external stimuli, the CPU 11 causes the robot 1 to perform spontaneous auto-generated motions at predetermined timings.

Hereinafter, the method of judging the type of an external stimulus that involves contact with the robot 1 and that has been received by the robot 1 is described. In the following, data items obtained by the touch sensors 51, the motion sensor 52, and the microphone 54, respectively, are referred to as "individual detected data items"; and the combination of the individual detected data items by the touch sensors 51, the motion sensor 52, and the microphone 54 is referred to as "detected data D". As shown in FIG. 5, the detected data D includes first detected data D1 by the sensors S (the touch sensors 51 and the motion sensor 52) and second detected data D2 of sound detected by the microphone 54. In FIG. 5, the individual detected data item by the touch sensors 51 is simply denoted by "A", the individual detected data item by the motion sensor 52 by "B", and the individual detected data item by the microphone 54 by "C". The individual detected data item A by the touch sensor 51 includes data on whether the touch sensor 51 has detected contact and data on the contact strength of the detected contact, for example. The individual detected data item B by the motion sensor 52 includes data on the acceleration and angular speed in six axes of the acceleration sensor 521 and the gyro sensor 522, for example. The individual detected data item C by the microphone 54 includes data on the volume and time-series changes (sound length) of the detected sound for each frequency band, for example.

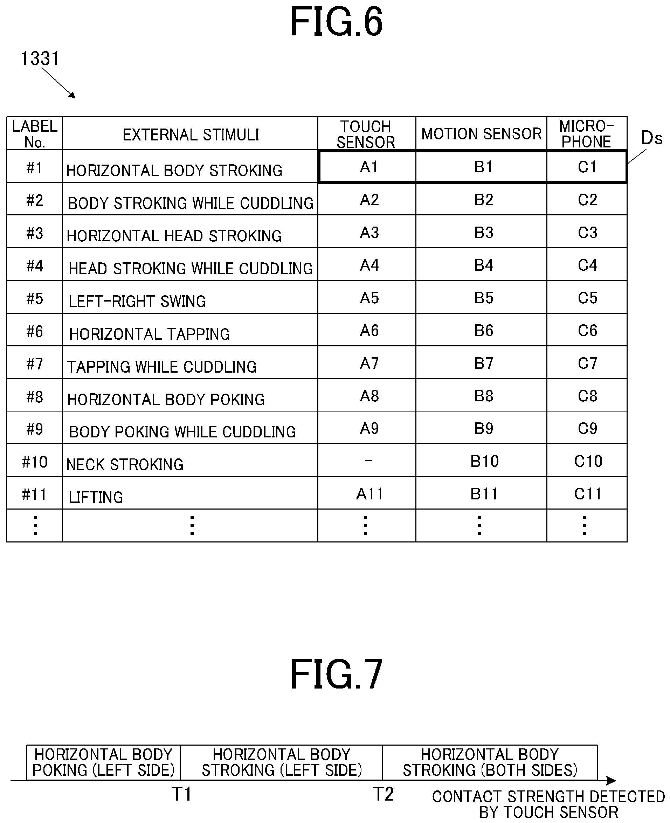

The CPU 11 obtains the detected data D by the touch sensors 51, the motion sensor 52, and the microphone 54 at a predetermined frequency. The detected data D may be obtained at the frequency of several hundreds of milliseconds, for example. Multiple sets of detected data D (e.g., three sets) may be subjected to predetermined statistical processing to generate one set of detected data D for judgment. Based on the detected data D and the standard data table 1331 shown in FIG. 6, the CPU 11 judges the type of external stimulus that the robot 1 has received. The standard data table 1331 includes standard data Ds that is generated beforehand in association with each of different external stimuli (multiple specific external stimuli). The standard data Ds in each row is generated, based on the individual detected data items of the touch sensors 51, the motion sensor 52, and the microphone 54, respectively, when the robot 1 has received the external stimulus corresponding to the row. In other words, the standard data Ds represents standard individual detected data items of the touch sensors 51, the motion sensor 52, and the microphone 54 when the robot 1 has received the external stimulus corresponding to the row.

The standard data table 1331 in FIG. 6 includes external stimuli, such as "horizontal body stroking", "body stroking while cuddling", "horizontal head stroking", "head stroking while cuddling", "left-right swing", "horizontal tapping", "tapping while cuddling" "horizontal body poking", "body poking while cuddling", "neck stroking", and "lifting". The external stimuli are each allocated with a unique label number. In these external stimuli, "horizontal" refers to external stimuli that the robot 1 receives in a state of being placed on a substantially horizontal surface. "Cuddling" refers to external stimuli that the robot 1 receives in a state of being cuddled by the user. "Body stroking" (stroking) refers to the action of stroking the body 103 of the robot 1 by the user. "Head stroking" (stroking) refers to the action of stroking the head 101 of the robot 1 by the user. "Left-right swing" refers to the action of holding and swinging the robot 1 leftward and rightward by the user. "Tapping" refers to the action of tapping the robot 1 with the palm or the like by the user. "Tapping" is an example of communications by the user when the user wants to soothe, lull, or pacify the robot 1. "Tapping" is also an example of communications that reflect the mind of the owner, such as "you are adorable", "you are precious", or "please calm down". "Body poking" (poking) refers to the action of lightly poking the robot 1 with a finger or the like by the user. "Body poking" is an example of communications by the user when the user wants to play with, take care of, or wake up the robot 1, for example. "Body poking" is also an example of communications that reflect the mind of the owner, such as "I want to see how the robot 1 reacts", "I want to take care of the robot 1", or "I want your attention", for example. "Neck stroking" refers to the action of stroking the part between the head 101 and the body 103 of the robot 1 by the user. "Neck stroking" is an external stimulus made on a region where no touch sensors 51 are provided. Therefore, the standard data Ds for "neck stroking" does not include the individual detected data item A by the touch sensors 51. "Lifting" refers to the action of lifting the robot 1 in the arms by the user. The external stimuli listed in FIG. 6 are examples. The standard data table 1331 may include standard data Ds corresponding to external stimuli other than those listed in FIG. 6.

The CPU 11 derives the degree of similarity between the detected data D in FIG. 5 and the standard data Ds for the respective external stimuli in the standard data table 1331 in FIG. 6. Among the external stimuli in the standard data table 1331, the CPU 11 determines the external stimulus corresponding to the standard data Ds having the highest degree of similarity with the detected data D to be the external stimulus that the robot 1 has received. For example, the CPU 11 may convert the detected data D and the standard data Ds into points in a n-dimensional space and judge that the shorter the Euclidean distance between these points is, the higher the degree of similarity is. As an example, the CPU 11 may perform a predetermined process on the three individual detected data items included in the detected data D to obtain a pair of average value and deviation and perform the same process on the three individual detected data items included in the standard data Ds to obtain a pair of average value and deviation. The CPU 11 may then derive the Euclidean distance between the average value and deviation of the detected data D and the average value and deviation of the standard data Ds. Herein, the deviation may be a statistical indicator value indicating the degree of variation in the three individual detected data items (e.g., standard deviation). The average value and deviation of each set of the standard data Ds may be derived and stored in the storage 13 beforehand. The CPU 11 may convert the detected data D and the standard data Ds into vectors in a n-dimensional space and derive the degree of similarity (e.g., cosine similarity) between these vectors.

Thus, the individual detected data item by the microphone 54 is used in addition to the individual detected data items by the touch sensors 51 and the motion sensor 52. This allows the robot 1 to distinguish external stimuli in different contact manners and judge the external stimulus. External stimuli in different contact manners generate sounds of different volumes and lengths. Such a difference in sounds can be detected by the microphone 54. For example, depending on the contact manner, the sound generated by contact between the hand of the user and the exterior 200 varies, or the sound generated by rubbing between the exterior 200 and the main body 100 varies. Specifically, "tapping" involves contact with a relatively large area on the surface of the robot 1, so that "tapping" tends to generate sound in a wide area by the contact between the hand and the exterior 200. Further, by the contact of "tapping", the exterior 200 tends to move in a wide area with respect to the main body 100, and the sound generated by such movements is likely to be detected by the microphone 54. On the other hand, "poking" involves contact with a smaller area on the surface of the robot 1 than "tapping". Therefore, in "poking", the contact between the hand and the exterior 200 is less likely to generate sound, and the movement of the exterior 200 with respect to the main body 100 caused by the contact is likely to occur in a limited area. Therefore, the sound of "poking" is less likely to be detected by the microphone 54 than the sound of "stroking" or "tapping". Even when "stroking", "tapping", and "poking" have similar individual detected data items by the touch sensors 51 and the motion sensor 52, "stroking", "tapping", and "poking" have different individual detected data items by the microphone 54. Therefore, "stroking", "tapping", and "poking" can be distinguished from each other and detected. Further, "stroking" on the robot 1 can be subdivided for judgment. For example, "stroking" in such a way as to trace the surface of the robot 1 and "stroking" in such a way as to hold the body 103 from the left and right sides result in different individual detected data items by the microphone 54. According to the method of this embodiment, these different types of "stroking" can be distinguished and judged. Further, the method of this embodiment can also detect and judge external stimuli involving contact on areas where no touch sensors 51 are provided, such as "neck stroking". For example, although the standard data Ds for "neck stroking" does not include an individual detected data item by the touch sensors 51, the standard data Ds reflects characteristics of the individual detected data items by the motion sensor 52 and the microphone 54 when the robot 1 has received "neck stroking" as an external stimulus. Thus, when detected data D does not include a valid individual detected data item by the touch sensors 51 but includes valid individual detected data items by the motion sensor 52 and the microphone 54, the CPU 11 can judge whether the robot 1 has received the external stimulus of "neck stroking", based on the degree of similarity between the detected data D and the standard data Ds of "neck stroking". The above is a typical example case where external stimuli are distinguishable by using the microphone 54. The types of judgeable external stimuli are not limited to the above.

"Body poking" and "body stroking" may be distinguished based on the contact strength, which is included in the individual detected data item by the touch sensors 51. As shown in FIG. 7, when the contact strength detected by the touch sensor 51 is less than a threshold T1, the CPU 11 judges the contact to be "body poking" on one side (left or right side) of the body 103. When the contact strength detected by the touch sensor 51 is equal to or greater than the threshold T1 and is less than a threshold T2 that is greater than the threshold T1, the CPU 11 judges the contact to be "body stroking" on one side (left or right side) of the body 103. When the contact strength detected by the touch sensor 51 is equal to or greater than the threshold T2, the CPU 11 judges the contact to be "body stroking" on both sides (left and right sides) of the body 103. To enable such judgment, multiple sets of standard data Ds may be registered in association with a single external stimulus in the standard data table 1331 of FIG. 6. For example, for "horizontal body stroking", multiple sets of standard data Ds may be prepared for (i) a case where both sides of the body 103 are stroked, (ii) a case where the left side is strongly stroked, and (iii) a case where the right side is strongly stroked, respectively. If an external stimulus has a high degree of similarity with any of these sets of the standard data Ds, the stimulus may be judged to be "horizontal body stroking". For another example, based on the contact strength of the individual detected data item by the touch sensor 51, either "body poking" or "body stroking" may be excluded from the external stimuli of the standard data table 1331. Then, judgment may be performed among the remaining external stimuli.

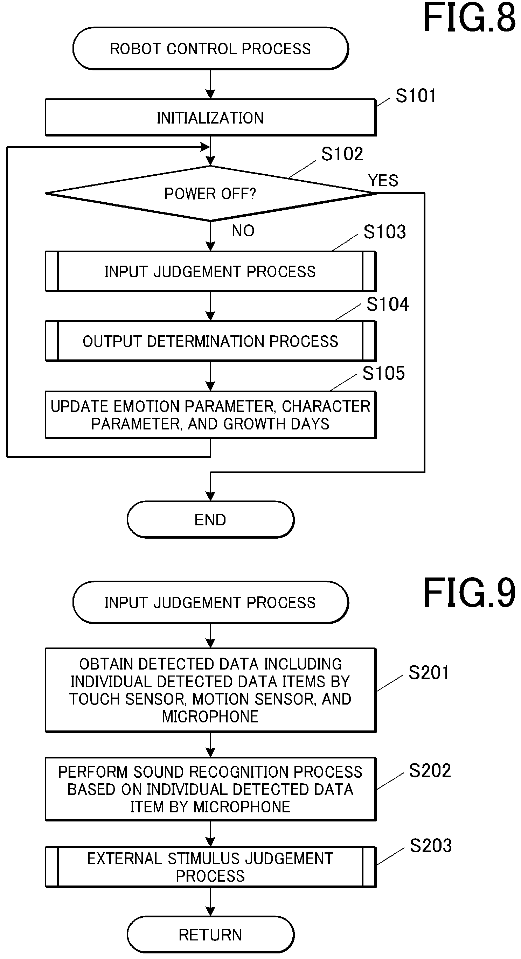

With reference to FIG. 8 to FIG. 11, the robot control process executed by the CPU 11 to realize the above motions of the robot 1 is described. The robot control process starts when the robot 1 is powered on. When the robot control process in FIG. 8 starts, the CPU 11 performs a predetermined initialization process (Step S101) and determines whether the robot 1 is to be powered off (Step S102). Herein, the CPU 11 determines that the robot 1 is to be powered off when the user has performed an operation of turning off the robot 1 or when the remain battery level of the battery 71 is below a predetermined lower limit. When determining that the robot 1 is not to be turned off (NO in Step S102), the CPU 11 performs an input judgment process to be described later (Step S103). The CPU 11 then performs an output determination process (Step S104). In the output determination process, the CPU 11 determines an output (i.e., a motion) by the robot 1 based on the result of the input judgment process and causes the robot 1 to perform the determined motion. Thereafter, based on the motion history of the robot 1, the CPU 11 updates the emotion parameters, character parameters, and growth days in the state data 132 and stores them in the storage 13 (Step S105). After completion of Step S105, the CPU 11 returns to Step S102. The loop process of Steps S102 through S105 is repeated at a predetermined frequency (e.g., every several hundreds of milliseconds). When determining in Step S102 that the robot 1 is to be powered off (YES in Step S102), the CPU 11 ends the robot control process.

As shown in FIG. 9, when the input judgment process is called, the CPU 11 obtains detected data D including individual detected data items by the touch sensors 51, the motion sensor 52, and the microphone 54 (Step S201). Based on the individual detected data item by the microphone 54, the CPU 11 performs a sound recognition process (Step S202). Herein, the CPU 11 performs a predetermined sound recognition process on the individual detected data item by the microphone 54 to obtain sound information related to the detected sound. The sound information may include information indicating whether the sound is a human voice and whether the sound is the voice of the registered user, for example. Next, the CPU 11 performs an external stimulus judgment process for judging the external stimulus received by the robot 1 (Step S203).

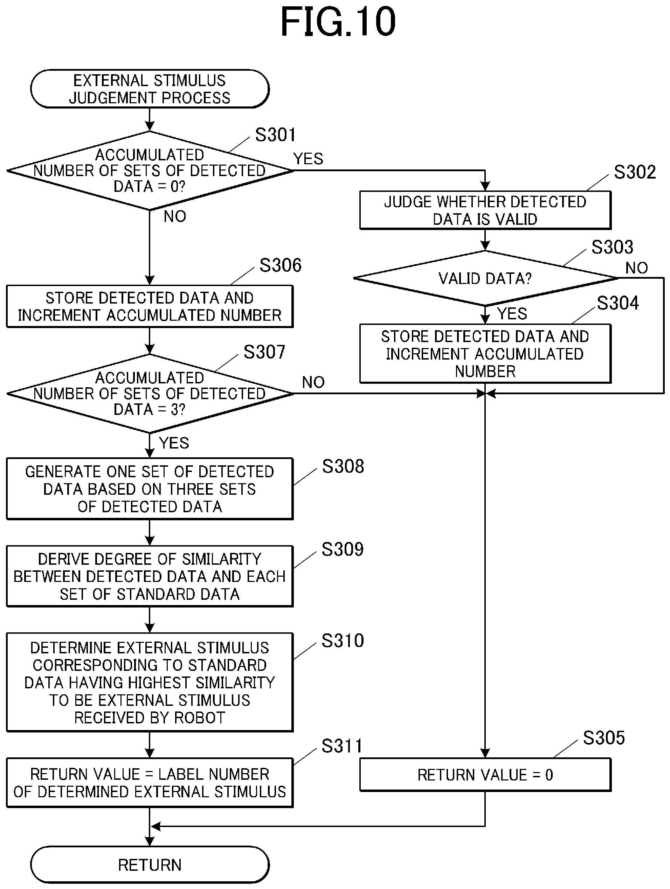

As shown in FIG. 10, when the external stimulus judgment process is called, the CPU 11 determines whether the accumulated number of sets of detected data D is "0" (Step S301). The accumulated number of sets of detected data D is initialized to "0" (zero) in Step S101 in FIG. 8. When Step S301 is performed for the first time after the initialization, the accumulated number of sets of detection data D is judged to be "0". When the accumulated number of sets of detected data D is "0" (YES in Step S301), the CPU 11 judges whether the detected data D, which has been obtained in Step S201 in FIG. 9 and which includes the individual detected data items by the touch sensors 51, the motion sensor 52, and the microphone 54, is valid (Step S302). The criteria for judging validity can be determined as appropriate. For example, the individual detected data item by the touch sensors 51 may be judged to be valid when the contact strength is equal to or greater than the first threshold. The individual detected data item by the motion sensor 52 may be judged to be valid when data of each axis does not have an abnormal value. The individual detected data item by the microphone 54 may be judged to be valid when the sound volume is equal to or greater than the second threshold. The detected data D may be judged to be valid when any of the individual detected data items by the touch sensors 51, the motion sensor 52, and the microphone 54 is valid. For another example, the detected data D may be judged to be valid when two of or all the individual detected data items by the touch sensors 51, the motion sensor 52, and the microphone 54 are valid. When judging that the detected data D is valid (YES in Step S303), the CPU 11 stores the detected data D in the storage 13 and increments the accumulated number of sets of detected data D (i.e., add one (1) to the accumulated number). After completing Step S304 or when determining that the detected data D is not valid (NO in Step S303), the CPU 11 assigns "0" to the return value (Step S305). The return value of "0" means that no external stimulus was detected in the external stimulus judgment process.

When determining in Step S301 that the accumulated number of sets of detected data D is 1 or greater (NO in Step S301), the CPU 11 stores the detected data D obtained in Step S201 of FIG. 9 in the storage 13 and increments the accumulated number of sets of detected data D (Step S306). The CPU 11 determines whether the accumulated number of sets of detected data D is "3" (Step S307). When determining that the accumulated number is less than "3" (NO in Step S307), the CPU 11 proceeds to Step S305 and assigns "0" to the return value. When determining that the accumulated number is "3" (YES in Step S307), the CPU 11 generates one set of detected data D based on three sets of detected data D stored in the storage 13 (Step S308). The one set of detected data D represents the three sets of detected data D stored in the storage 13. For example, the CPU 11 may generate one set of detected data D by averaging the values of the three sets of detected data D. For another example, the CPU 11 may generate one set of detected data D by selecting and combining the medians of the respective values in the three sets of detected data D. The CPU 11 derives the degree of similarity between the detected data D and each of multiple sets of standard data Ds (Step S309). For example, the CPU 11 derives the Euclidean distance between the average value and deviation obtained from the detected data D and the average value and deviation obtained from each set of standard data Ds, as described above. The CPU 11 judges that the external stimulus corresponding to the standard data Ds having the highest degree of similarity with the detected data D (e.g., the standard data Ds having the shortest Euclidean distance to the detected data D) is the external stimulus that the robot 1 has received (Step S310). The CPU 11 assigns the label number of the external stimulus determined in Step S310 to the return value (Step S311). After ending Step S311 or S305, the CPU 11 ends the external stimulus judgment process and ends the input judgment process in FIG. 9.

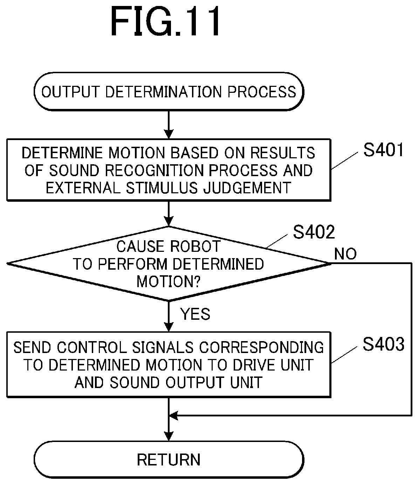

As shown in FIG. 11, when the output determination process starts, the CPU 11 determines the motion to be performed by the robot 1, based on the result of the sound recognition process in Step S202 of FIG. 9 and the result of judgment of the external stimulus (the external stimulus identified by the return value) in the external stimulus judgment process of FIG. 10 (Step S401). When the CPU 11 has determined that the robot has received an external stimulus, the CPU 11 determines one motion from multiple motions associated with the external stimulus beforehand, according to the probabilities assigned to the respective motions. The CPU 11 may change the multiple motions, which are candidates to be selected, according to the character parameters and the emotion parameters of the robot 1, ambient illuminance, whether the robot is in the sleep mode, the result of the sound recognition process, and so forth. When the CPU 11 has determined that the robot has not received an external stimulus, namely when the return value is "0", the CPU 11 does not determine the motion corresponding to the external stimulus. In this case, the CPU 11 may determine a spontaneous motion to be performed by the robot 1 when conditions for performing spontaneous motions are met. The CPU 11 determines whether to cause the robot 1 to perform the determined motion (Step S402). For example, when the robot 1 is performing a different motion other than the determined motion, the CPU 11 determines to allow the robot 1 to prioritize the different motion and not cause the robot 1 to perform (start) a new motion. When determining to cause the robot 1 to perform the determined motion (YES in Step S402), the CPU 11 sends control signals corresponding to the determined motion to the drive unit 40 and the sound output unit 30 (Step S403). Thus, the CPU 11 causes the drive unit 40 to drive the twist motor 41 and the up-down motor 42 and causes the sound output unit 30 to output sound so that the robot 1 performs the determined motion. When Step S403 ends or when in Step S402 determining not to cause the robot 1 to perform the determined motion (NO in Step S402), the CPU 11 ends the output determination process.

As described above, according to the embodiment, the judgment apparatus 10 includes the CPU 11 as a processor. The CPU 11 judges the type of external stimulus that involves contact with the robot 1 and that has been received by the robot 1, based on the first detected data D1 and the second detected data D2. The first detected data D1 is obtained by the sensors S that can detect contact with the robot 1. The second detected data D2 is related to sound and obtained by the microphone 54 provided to the robot 1. Thus, the judgment apparatus 10 can judge the type of external stimulus, based on a difference in sound generated by the contact with the robot 1 in addition to the contact with the robot 1 and/or the movement of the robot 1. Thus, the judgment apparatus 10 can distinguish external stimuli in different contact manners and judge the type of external stimulus. The judgment apparatus 10 can therefore analyze the user's communications involving contact with the robot 1 in more details than the known art.

Further, the sensors S detect at least either the contact with the robot 1 or the movement of the robot 1. Thus, the judgment apparatus 10 can judge the type of external stimulus, based on (i) the contact with the robot 1 and/or the movement of the robot 1 and (ii) the sound generated by the contact with the robot 1.

Further, based on the degree of similarity between (i) the first detected data D1 and the second detected data D2 and (ii) the standard data Ds generated beforehand in association with each of different specific external stimuli, the CPU 11 judges that the external stimulus corresponding to the first detected data D1 and the second detected data D2 is a specific external stimulus among the specific external stimuli. Thus, the judgment apparatus 10 can judge the type of external stimulus received by the robot 1 by performing a simple process of deriving the degree of similarity.

Further, the standard data Ds corresponding to a specific external stimulus among the multiple specific external stimuli is generated based on the detected data obtained by the sensors S and the microphone 54 when the robot 1 has received the specific external stimulus. Thus, the standard data Ds is generated by using the sensors S and the microphone 54, which are used for judging the type of the external stimulus. This increases accuracy in judgment of the type of external stimulus.

Further, the multiple specific external stimuli include tapping on the robot 1 and stroking on the robot 1. Thus, the normal stroking on the robot and the tapping on the robot 1 can be distinguished and judged.

Further, the sensors S include at least either the touch sensors 51 that detect contact with the robot 1 and the motion sensor 52 that detects the movement of the robot 1. Thus, the judgment apparatus 10 can detect the contact with the robot 1 and/or the movement of the robot 1 to judge the type of external stimulus.

Further, when the first detected data D1 does not include valid detected data by the touch sensors 51 but includes valid detected data by the motion sensor 52, the CPU 11 judges the type of external stimulus, based on the detected data by the motion sensor 52 included in the first detected data D1 and the second detected data D2. Thus, the judgment apparatus 10 can detect an external stimulus that involves contact with the area where no touch sensors 51 are provided and judge the type of the external stimulus.

Further, according to the embodiment, the robot 1 includes the judgment apparatus 10, the sensors S, and the microphone 54. Thus, the robot 1 can distinguish external stimuli in different contact manners and judge the type of external stimulus. The robot 1 can therefore analyze the user's communications that involve contact with the robot 1 in detail and perform appropriate reaction motions corresponding to the communications.

Further, according to the present disclosure, the inputs to be used for judging the type of external stimulus are classified into first detected data and second detected data. Therefore, an increase in the computation amount of the processor can be restrained by appropriately designing the judgment process.

Further, according to the present disclosure, detection information to be used for judgment is specified as based on the first detected data and second detected data. This clarifies the types of data required for judgment and data to be managed. Accordingly, an increase in storage resources required for data retention and buffering can be restrained.

According to the judgment method of the embodiment, the CPU 11 executes the above process. Thus, it is possible to distinguish and judge external stimuli in different contact manners. Further, the program 131 according to the embodiment causes the CPU 11 to perform the above process. Thus, it is possible to distinguish and judge external stimuli in different contact manners.

The above embodiment is not intended to limit the present disclosure and can be variously modified. For example, the sensors S may not include the motion sensor 52 as long as the sensors S include the touch sensor(s) 51. In such a case, it is possible to judge the type of external stimulus received by the robot 1, based on the first detected data D1 by the touch sensors 51 and the second detected data D2 by the microphone 54. Further, the sensors S may include sensing devices other than the touch sensors 51 and the motion sensor 52.

The CPU 11 may input detected data D into a predetermined machine learning model to obtain information related to the type of external stimulus that the robot 1 has received. Based on the obtained information, the CPU 11 may judge the type of external stimulus. The machine learning model can be trained with types of specific external stimuli and detected data D when the robot 1 has received these specific external stimuli, as training data.

The CPU 11 may judge the type of external stimulus received by the robot 1 by a method other than the method of comparing the detected data D with the standard data Ds of specific external stimuli in the standard data table 1331. For example, the CPU 11 may convert the detected data D into coordinates in a n-dimensional space by a predetermined process. Based on the conditions satisfied by the coordinates, the CPU 11 may judge the type of external stimulus. For another example, the CPU 11 may convert the detected data D into a determination value by a predetermined process. Based on the magnitude of the determination value, the CPU 11 may judge the external stimulus. In the above description, latest three sets of detected data D are used to judge the type of external stimulus. However, the present disclosure is not limited to this. For example, a latest one set of detected data D may be used to judge the type of external stimulus.

Although the robot 1 includes the exterior 200 as an example in the above description, the present disclosure is not limited to this. The robot 1 may not include the exterior 200. Although the exterior 200 covers the entire front surface of the main body 100 as an example, the present disclosure is not limited to this. The exterior 200 may only cover part of the main body 100 where the touch sensors 51 and the microphone 54 are provided.

The configuration of the robot 1 is not limited to the example shown in FIG. 1 to FIG. 4. For example, the robot 1 may imitate a real creature, such as a human being, an animal, a bird, or a fish; a non-existent creature, such as a dinosaur; or an imaginary creature.

In the above description, the flash memory of the storage 13 is used as an example of a computer-readable medium that stores the program according to the present disclosure. However, the present disclosure is not limited to this example. As other computer-readable media, an information recording medium such as a hard disk drive (HDD), a solid state drive (SDD), or a CD-ROM is applicable, for example. Further, a carrier wave may be used as a medium that provides data of the program of the present disclosure via a communication line.

The detailed configuration and detailed operations of the components constituting the robot 1 in the above embodiment can be appropriately modified without departing from the scope of the present disclosure. Although the embodiment of the present disclosure has been described, the scope of the present disclosure is not limited to the embodiment described above but encompasses the scope of the invention recited in the claims and the equivalent thereof.

## Claims

1. A judgment apparatus (10) comprising one or more processors (11) configured to judge a type of an external stimulus received by a robot (1) and involving contact with the robot, based on first detected data (D1) and second detected data (D2), wherein:
the first detected data is obtained by a sensor (S) capable of detecting contact with the robot, and
the second detected data is related to sound and obtained by a sound detector (54) included in the robot.

2. The judgment apparatus (10) according to claim 1, wherein the sensor (S) detects at least one of the contact with the robot (1) and a movement of the robot.

3. The judgment apparatus (10) according to claim 1 or claim 2, wherein:
multiple sets of standard data (Ds) are generated beforehand in association with respective different specific external stimuli, and
the one or more processors (11) judge that the external stimulus corresponding to the first detected data (D1) and the second detected data (D2) is a specific external stimulus among the specific external stimuli, based on a degree of similarity between (i) the first detected data and the second detected data and (ii) each of the multiple sets of standard data.

4. The judgment apparatus (10) according to claim 3, wherein, among the multiple sets of standard data (Ds), a set of standard data associated with a specific external stimulus among the specific external stimuli is generated, based on detected data obtained by the sensor (S) and the sound detector (54) when the robot (1) has received the specific external stimulus.

5. The judgment apparatus (10) according to claim 3 or claim 4, wherein the specific external stimuli include tapping on the robot (1) and stroking on the robot.

6. The judgment apparatus (10) according to any one of claims 1 to 5, wherein the sensor (S) includes at least one of a touch sensor (51) that detects the contact with the robot (1) and a motion sensor (52) that detects the movement of the robot.

7. The judgment apparatus (10) according to claim 6, wherein:
the sensor (S) includes the touch sensor (51) and the motion sensor (52), and
in a case where the first detected data (D1) does not include valid detected data by the touch sensor but includes valid detected data by the motion sensor, the one or more processors (11) judge the type of the external stimulus, based on the detected data by the motion sensor included in the first detected data and the second detected data (D2).

8. A robot (1) comprising:
the judgment apparatus (10) according to claim 1;
the sensor (S); and
the sound detector (54).

9. A judgment method to be performed by a computer (11), the method comprising judging a type of an external stimulus received by a robot (1) and involving contact with the robot, based on first detected data (D1) and second detected data (D2), wherein:
the first detected data is obtained by a sensor (S) capable of detecting contact with the robot, and
the second detected data is related to sound and obtained by a sound detector (54) included in the robot.

10. A program (131) that causes a computer (11) to perform a process of judging a type of an external stimulus received by a robot (1) and involving contact with the robot, based on first detected data (D1) and second detected data (D2), wherein:
the first detected data is obtained by a sensor (S) capable of detecting contact with the robot, and
the second detected data is related to sound and obtained by a sound detector (54) included in the robot.
